(19) Europäisches Patentamt
European Patent Office
Office européen des brevets

(11) EP 2 487 610 B1

(12) EUROPEAN PATENT SPECIFICATION

(45) Date of publication and mention of the grant of the patent:
16.01.2019 Bulletin 2019/03

(51) Int Cl.:
*G06F 17/30* $^{(2019.01)}$

(21) Application number: 12000641.6

(22) Date of filing: 02.02.2012

(54) **A METHOD FOR GENERATING A RANDOMIZED DATA STRUCTURE FOR REPRESENTING SETS, BASED ON BLOOM FILTERS**

VERFAHREN ZUR ERZEUGUNG EINER RANDOMISIERTEN DATENSTRUKTUR FÜR DIE REPRÄSENTATION VON SETS AUF DER GRUNDLAGE VON BLOOMFILTERN

PROCÉDÉ DE GÉNÉRATION D'UNE STRUCTURE DE DONNÉES RANDOMISÉES POUR REPRÉSENTER DES ENSEMBLES, BASÉ SUR DES FILTRES DE BLOOM

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 10.02.2011 IL 21116311

(43) Date of publication of application:
15.08.2012 Bulletin 2012/33

(73) Proprietor: Deutsche Telekom AG
53113 Bonn (DE)

(72) Inventors:
• Hendler, Danny
55238, Kiryat-Ono (IL)
• Puzis, Rami
77487 Ashdod (IL)

(74) Representative: Flaccus, Rolf-Dieter
Flaccus · Müller-Wolff
Patentanwälte
Bussardweg 10
50389 Wesseling (DE)

(56) References cited:
US-A1- 2008 307 189

• MUSTAFA CANIM ET AL: "Buffered Bloom Filters on Solid State Storage", ADMS 2010 FIRST INTERNATIONAL WORKSHOP ON ACCELERATING DATA MANAGEMENT SYSTEMS USING MODERN PROCESSOR AND STORAGE ARCHITECTURES, 13 September 2010 (2010-09-13), XP055043664,
• ASHISH GOEL ET AL: "Small subset queries and bloom filters using ternary associative memories, with applications", PROCEEDINGS OF THE 2007 ACM SIGMETRICS INTERNATIONAL CONFERENCE ON MEASUREMENT AND MODELING OF COMPUTER SYSTEMS , SIGMETRICS '07, vol. 38, no. 1, 12 June 2010 (2010-06-12), page 143, XP055214849, New York, New York, USA ISSN: 0163-5999, DOI: 10.1145/1811099.1811056 ISBN: 978-1-59-593639-4

## Description

## Field of the Invention

The present invention relates to data structures. More particularly, the invention relates to a set-representation scheme, based on Bloom filters.

## Background of the Invention

Data structures make the management of huge amounts of data, such as large databases, possible. Specific data structures utilize particular ways of storing and organizing data in computers, so that it can be used efficiently. Different kinds of data structures are suited to serve different kinds of applications.

Bloom filter is a space-efficient, hash-based, randomized data structure for representing data sets. Bloom filter is a scheme for representing a set of n elements, taken from some, typically much larger, domain U. The Bloom filter is optimized towards fast query times, during which it checks whether a given element is in the set or not. Generally, Bloom filter consists of an array of m bits, initialized to '0'. Each bit in the array is associated with a bucket. A bucket stores a subset of 0 or more elements of the set represented by the Bloom filter. Each bit in the m bits array is interpreted as a flag indicating whether its associated bucket is empty (in which case, the corresponding bit is reset) or non-empty (in which case, the corresponding bit is set). Each Bloom filter uses independent hash functions, each of which uniformly and randomly maps elements from U to the bucket indices (in the range $[0,...,m-1]$).

Bloom filters support the following operations:

- **Insert** an element to the Bloom filter.
- **Query** whether an element is in the set.
- **Remove** an element from the Bloom filter.

In order to insert an element "e" to the Bloom filter, the following sequence of steps is performed:

a) k hash functions are applied to e, resulting in k bucket indexes $i_1,...,i_k$.

b) Flags $i_1,...,i_k$ of the Bloom filter are set to 1 (regardless of their previous value) to indicate that the respective buckets are now non-empty.

c) Element e is added to the buckets $i_1,...,i_k$.

Some applications maintain the buckets themselves (representing a bucket in some implementation-specific manner, e.g. as a linked list) in a different type of memory unit than the one used to store the filter flag array. A Memory used to store the flag array is typically fast and therefore relatively expensive, and the memory used to store the buckets is typically slower and hence relatively cheaper. There are many applications that optimize storage of elements in the slower memory. For example, some applications add e to each of the buckets, while others add e to just a single bucket. Applications for which it is sufficient to only support element insertion and membership queries do not have to maintain bucket information in addition to the Bloom filter flag array. For such applications, incorrect query responses which indicate that an element e is in the set, even though it is not, are denoted as false positive responses.

Querying whether an element e belongs to a given set, requires the following sequence of steps:

a) k hash functions are applied to e, resulting in k bucket indexes $i_1,...,i_k$.

b) Flags $i_1,...,i_k$ of the Bloom filter are tested. If one or more of these flags is reset, element e is not in the set. This response to the query is said to be negative. If all flags are set then there are two possibilities: either the item is indeed in the set (denoted as true positive response) or the item is not in the set (denoted as false positive response).

c) When the Bloom filter returns a positive response in step b), the application does not yet know for sure whether or not the element really exists in the set. If bucket contents are stored in memory, then they are examined to provide a deterministic response to the query. Otherwise, the response remains according to the test performed in step b).

The Remove function removes an element from the Bloom filter. Removing an element is optional and is not supported by all Bloom filter implementations. Most applications that support the remove operation also store the bucket contents. In these cases, the removal of element e is implemented by performing the following sequence of steps:

a) The k hash functions applied to e while inserting it are applied to e again, resulting in k bucket indexes $i_1,...,i_k$.

b) Element e is removed from buckets $i_1,...,i_k$. The Bloom filter flag corresponding to any bucket that now becomes empty is reset.

As mentioned above, some applications store buckets' contents in their memory. In order to reduce cost, those buckets are often stored in a larger yet slower memory than the one used to store the Bloom filter flag array. Many memory accesses to this slower memory reduce the performance rate of the application. It is therefore desirable that accesses to this memory will be as infrequent as possible. If bucket contents are not stored, then a false positive response received after testing the Bloom filter flag array yields an erroneous response to the query. For those reasons, a primary design goal of Bloom filters and other probabilistic data structures is to minimize the probability for a false positive response.

Bloom filters try to reduce the probability for a false positive response by selecting a value for k (number of hash functions) that will minimize the expected false positive probability. Given specific m, n and k Bloom-filter parameters and assuming that the hash functions are randomized and independent, the expected false positive probability is given by the following expression:

$$P_{False-Positive\_(m,n,k)} \cong (1 - e^{\frac{-kn}{m}})^k$$

Fixing m and n, the k that minimizes the false positive probability is:

$$K_{Optimum\_(m,n)} = \frac{m \ln 2}{n}$$

When the optimal k is selected, the false positive probability becomes:

$$P_{False-Positive\_(m,n,k_{Optimum})} \cong (1/2)^k$$

However, there are circumstances under which applications cannot employ the optimum number of hash functions ($K_{Optimum}$), typically, due to time constraints. This is since the application may have to serve query requests at a high rate and the computational resources available are insufficient to compute $K_{Optimum}$ hash values and/or to access $K_{Optimum}$ memory locations per queried element. The scheme of the present invention is superior to regular Bloom filters for time-constraint systems which require low number of random memory accesses to the fast memory and in which the available fast memory permits a medium-to-high ratio (5 or more) between the size of the Bloom filter bits array and the number of elements in the set.

Another scheme for implementing a Bloom filter in time-constrainei systems is the "double hashing" scheme disclosed by Kirsch et. al. (A. Kirsch and M. Mitzenmacher. Less Hashing, Same Performance: Building a Better Bloom Filter. Random Struct. Algorithms 33(2): 187-218). The "double hashing" scheme is used for implementing a Bloom filter, as two hash functions can be used to "simulate" a larger number of hash functions. As stated in their work, only two hash functions are necessary to effectively implement a Bloom filter without any increase in the asymptotic false positive probability. Indeed, "double hashing" offers a partial solution to time-constrained systems. However, this solution still requires a number of memory accesses that is proportional to the total number of used hash functions (namely, the basic two functions plus the simulated functions).

US 2008/307189 discloses a computer storage media with instructions stored thereon such that when these instructions are executed by the processor of a computing device, it identifies a first data set of elements and a second data set of elements, where the first data set and the second data set are disjoint. Each element in the first data set is assigned to a bucket of a first set of buckets and each element in the second data set is assign to a bucket of a second set of buckets. Then, a Bloom filter is generated for each bucket of the first set of buckets such that it indicates that each element assigned to the bucket of the first set of buckets is part of the first data set, and that indicates that each element assigned to a corresponding bucket of the second set of buckets is not part of the first data set. However, US 2008/307189 uses a regular Bloom filter without considering the fact that a digest symbol whose value is * (Don't Care) is a non-informative digest symbol. Therefore, it is less efficient, particularly when time-constrained queries.

ASHISH GOEL et al discloses "A small subset queries and Bloom filters using ternary associative memories, with applications". Ashish et al implements a Bloom Filter as a vector of ternary symbols (1, 0 or don't care)

None of the currently available techniques provide a satisfying solution for time-constrained applications. Therefore, there is a need for a system that provides a randomized data structure for representing sets, which incorporates the important benefits of prior art techniques, allows fast operation, and employs a reduced number of hash functions and random memory accesses.

It is therefore an object of the present invention to provide a method for generating a randomized data structure for representing sets, based on Bloom filters.

Another object of the present invention is to provide a method for generating a data structure adapted to time-constrained systems.

Another object of the present invention is to provide a method which reduces the false positive probability.

Yet another object of the present invention is to provide a method which reduces time complexity and the number of required memory accesses.

Other objects and advantages of the invention will become apparent as the description proceeds.

## Summary of the Invention

In a first aspect, the invention is directed to a method for representing sets of elements in a randomized data structure, adapted to reduce the false-positive probability in a time-constraint system, said method comprising the steps of: (a) partitioning a memory space to two layers, such that the first layer functions as a regular Bloom filter bits representing buckets, and the second layer comprises digest symbols; (b) partitioning said first layer of buckets and said second layer of digest symbols into sets; (c) assigning sets of symbols to sets of buckets; and (d) representing properties of elements belonging to said buckets sets as values in their corresponding symbols.

In an embodiment of the invention the Bloom filter bit may be interpreted as a flag, indicating whether or not its associated bucket is empty of elements.

In an embodiment of the invention the Bloom filter bit may be reset when its associated bucket is empty of elements, or set when its associated bucket is not empty.

In an embodiment of the invention the elements may be mapped uniformly and randomly to bucket-indices using k independent hash functions.

In an embodiment of the invention the Bloom filter bit may be stored in a fast memory unit.

In an embodiment of the invention the buckets themselves may be stored in an accessible memory unit.

In an embodiment of the invention the buckets themselves may be stored in the same memory unit used to store the Bloom filter bits or in a slower and cheaper type of memory unit.

In an embodiment of the invention each symbols set may be stored in memory adjacent to its associated Bloom filter bits set.

In an embodiment of the invention all symbols sets may be stored in a continuous memory block.

In an embodiment of the invention the symbols may be arbitrarily distributed throughout the memory.

In an embodiment of the invention the user may define the position of the symbols in the memory.

In an embodiment of the invention the second layer symbols may be ternary symbols, the value of which is selected from the group consisting of '0', '1' and 'don't care'.

In an embodiment of the invention the second layer symbols may be created by applying hash functions to the elements stored in the sets of buckets.

In an embodiment of the invention the second layer symbols may be created by choosing predefined random bits of the stored elements.

In one embodiment, the method further supports operations selected from the group consisting of inserting an element, removing an element, and querying whether or not an element is in a set.

In an embodiment of the invention the memory space may be equally partitioned between the two layers.

In an embodiment of the invention the user may define the memory space partition between the two layers.

## Brief Description of the Drawings

The above and other characteristics and advantages of the invention will be better understood through the following illustrative and non-limitative detailed description of embodiments thereof, with reference to the appended drawings, wherein:

- Fig. 1 schematically illustrates the layers partitions of the fast memory;
- Fig. 2 is a graph describing the improvement in false positive ratio as a function of m/n ratio;
- Fig. 3 is a graph describing the improvement in false positive ratio as a function of space partition between layers; and
- Fig. 4 is a graph describing the improvement in false positive ratio as a function of digest symbol number.

## Detailed Description of the Invention

In the following description, for the purpose of illustration, numerous specific details are provided. As will be apparent to the skilled person, however, the invention is not limited to such specific details and the skilled person will be able to devise alternative arrangements.

One of the key ideas of the present invention is to utilize the Bloom filter flag array in a different and unique manner. The novel scheme of the flag array according to the present invention will be referred hereinafter as "the bucket-digests scheme".

The method for generating and utilizing the bucket-digests scheme flag array of the present invention assumes that the number of hash functions (k) is sub-optimal, namely less hash functions then the optimal number as defined hereinabove ($K_{Optimum}$). It is also assumed that the average occupancy of the buckets is relatively small. As mentioned before, the method of the present invention is most relevant for situations in which m/n>5, hence the assumed average occupancy of the buckets is less than 1/5. Under these circumstances, the alternative usage of the bucket-digests scheme yields smaller expected false positive probability. Experimental results presented hereinafter demonstrate the reduction in the false positive probability for appropriate selection of parameters.

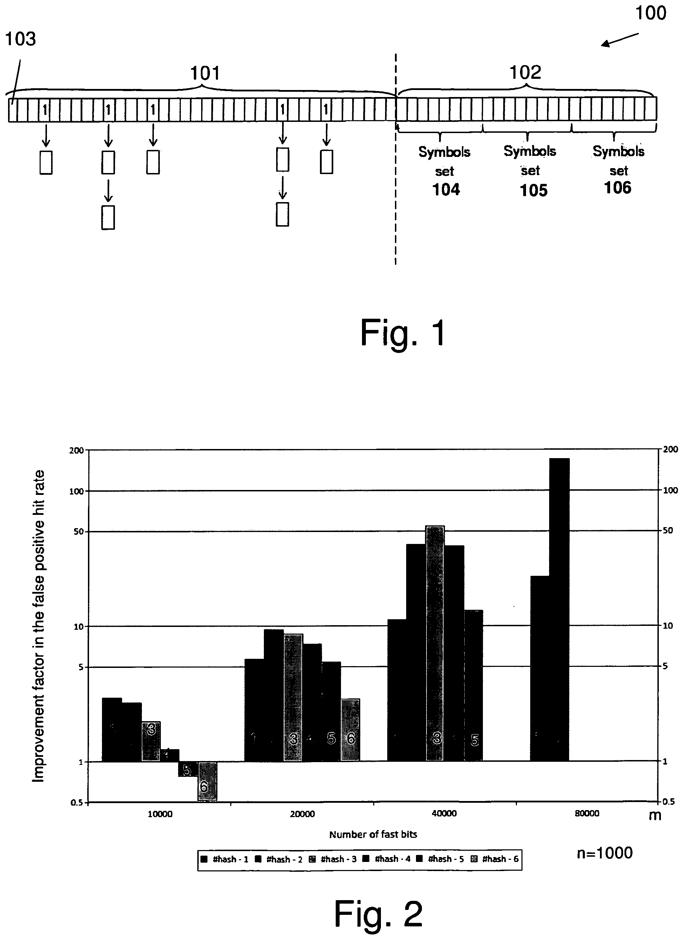

Referring now to the drawings, Fig. 1 schematically illustrates the layers partitions of the fast memory flag array 100. Instead of assigning each of the m fast memory bits to represent one filter flag, the bucket-digests scheme of the present invention is partitioned into two layers 101 and 102.

The first layer 101 functions as a regular Bloom filter, each bit 103 in this layer represents one bucket. In this exemplary embodiment, the first layer comprises $m_1$ bits, wherein $m_1=j \cdot r$, and $m_1<m$. In this exemplary embodiment, the second layer 102 comprises symbol sets 104-106, the symbol sets all together comprise $m_2$ digest symbols, wherein $m_2 = (m-m_1) \log_3 2$, and $m_2=1 \cdot r$. The special structure of the Bloom-Digests scheme is achieved by partitioning the buckets to sets. In this exemplary embodiment, each set of j consecutive first layer buckets is assigned exactly 1 second-layer digest symbols (although, of course, assigning digest symbol sets 105 to consecutive Bloom bucket-sets is just one way of applying the proposed scheme, providing an alternative partitioning ways would not exceed the scope of the invention).

For simplicity and without loss of generality, this exemplary embodiment assumes that j, r and 1 are integers. For presentation simplicity, both layers are depicted as being contiguous in memory. However, the scheme can also use other memory layouts. In one embodiment, each digest symbol set is stored in memory adjacent to the set of buckets it is associated with. Such layout is advantageous for performance reasons, as explained hereinafter.

The Digest symbols are ternary symbols representing common properties of the items belonging to a buckets set. Each digest symbol can assume one of 3 values: '0', '1', or * (Don't Care). Using the notation above, the 1 digest symbols used for each of the r bucket-sets (each comprising j buckets) are created by using 1 1-bit hash functions that are applied to the elements stored in the set of buckets: hash bit ht is used in the construction of digest symbol t for each of the bucket sets, for t=1,..,l.

The value of digest symbol $S_t$, computed for buckets set S has the following meaning:

- 0: the value of the t'th hash-bit is 0 for all the items in buckets set S.

- 1: the value of the t'th hash-bit is 1 for all the items in buckets set S.

- * (Don't Care): there exist some elements in one of the buckets in S for which the value of the hash bit is 0 and there exist some elements in one of the buckets in S for which the value of the hash bit is 1.

The values of the digest symbols corresponding to a set of buckets are meaningless if all the buckets in this set are empty. At initialization, the m fast-memory bits are partitioned between the two layers such that $m_1$ bits are assigned to the Bloom layer and $m_2 = (m-m_1)\log_2 3$ bits are assigned to the digest symbols layer. Upon initialization, all buckets are empty, all filter flags are off and the values of all digest symbols are immaterial.

Buckets-Digest filters support the following operations:

- **Insert** an element to the Buckets-Digest filter.
- **Query** whether an element is in the set.
- **Remove** an element from the Buckets-Digest filter.

In order to insert an element e to the Buckets-Digest filter, the following sequence of steps is performed:

1. Element e is first inserted to the Bloom layer, following the regular procedure of Bloom filter insertion (See "Background of the Invention"). Let $i_1,...,i_k$ denote the bucket indexes that result from applying the hash functions to e. Each of these indexes is an integer in the range $[0,...,m_1-1]$.

2. Next, the element e should be added to the digest-symbols layer. For each bucket index $i_x$, the corresponding set of digest symbols is located. As stated above, in one embodiment, each set of j consecutive (first-layer) Bloom filter flag bits shares a set of 1 (second-layer) digest symbols. Thus, the set of relevant digest symbols for bucket $i_x$ consists of symbols $Li_x / j\lrcorner..Li_x / j\lrcorner+l-1$. Other possible layouts of symbols (e.g., not consecutive) result in some variants in the flag/bucket layout.

Each located digest symbol s is updated as follows.

    a) If the inserted element is the first element in the respective buckets set (this can be easily verified by checking that all respective filter flags are reset), then each digest symbol $S_t$ is initialized to the value of the respective hash-bit function applied to e.

    b) If e is not the first element in the respective buckets set (this can be easily verified by checking that at least one of the respective filter flags is set), then digest symbol $S_t$ is updated as follows:

        i. If its value is * (Don't Care) then it does not change.

        ii. If its value is equal to the value of the respective hash-bit function applied to e then it does not change.

        iii. Otherwise, the value of the digest symbol is changed to *.

Observe that, with the exception of the first element inserted, the insertion of additional elements can only decrease the number of digest symbols whose value is not * (Don't Care). It is assumed that an informative digest symbol is a digest symbol whose value is '0' or '1', and that a digest symbol whose value is * (Don't Care) is a non-informative digest symbol. Thus, adding an element to a non-empty buckets set can only reduce the number of informative digest symbols. For that reason the method of the present invention is more efficient as compared with a regular Bloom filter when the ratio between the size of the Bloom bits array and the number of elements in the set is medium-to-high.

Querying whether an element e belongs to a given set requires the following sequence of steps:

1. The query starts with a regular Bloom filter query. If the Bloom filter returns a negative response, then e is not in set. If the Bloom filter returns an (either true or false) positive response then the following steps are applied in order to reduce the probability of false positives.

a) Let $i_1,...,i_k$ denote the bucket indexes that result from applying the hash functions to e in step 1. For each such index $i_x$ the following procedure is applied. The set of 1 digest symbols corresponding to the set of consecutive j buckets to which bucket $i_x$ belongs is identified as described above.

b) The 1 1-bit hash functions are applied to e. Denote the resulting bits by $h_0..h_{l-1}$.

c) Let $s_0..s_{l-1}$ denote the 1 digest symbols identified in step a) above. Each such digest symbol $s_x$ is now examined and checked against e as follows.

i. If $s_x=*$ (Don't care) then it is non-informative and cannot be used for detecting false positives.

ii. If $s_x \neq *$ (Don't care) and $s_x = h_x$ then the digest symbol is informative but matches e. Thus it does not identify e as not belonging to the set and cannot be used for detecting false positives.

iii. Otherwise (sx $\neq *$ (Don't care) and $s_x \neq h_x$), $s_x$ identifies e as not belonging to the set (i.e. a false positive response of the first layer Bloom filter). The query returns a negative result.

d) If e was not identified as not being in the set and the buckets-data is maintained (in slow memory), then it now may be accessed to provide a deterministic query response.

As mentioned before, not all Bloom filters must implement remove operations. Assuming that remove is implemented, the following sequence of steps is performed to remove element e from the Buckets-Digest filter.

a) The k hash functions applied to e while inserting are applied to e again, resulting in k indexes $i_1,...,i_k$ of the 1'st layer buckets.

b) Element e is removed from buckets $i_1,...,i_k$ in the regular manner.

c) The digest symbol-sets, to which each of the buckets $i_1,...,i_k$ are mapped, need to be updated. This is done by reconstructing these digest symbols based on the elements that remain in the respective buckets.

The following describes the experimental evaluation conducted for the new Bloom-Digests scheme and its results. The experiments compare the Bloom-Digests scheme with a regular Bloom filter implementation. Throughout all tests, both implementations use the same number of bits m. In all the experiments described n=1000. The results indicate that for given parameters m, n and k, the best (i.e. lowest) false positive probability of the new scheme is obtained when the m bits are partitioned between the two layers roughly equally.

Fig. 2 presents a graph showing the improvement in false positive ratio obtained by the Bloom-Digests scheme relative to a regular Bloom filter implementation. The graph presents the results of an experiment conducted for n=1000. The x-axis represents the value of m and the y-axis shows the improvement ratios. A few bars are shown per each x-axis value wherein each bar represents the improvement of the Bloom-Digests scheme when a specific number of hash functions are used. The bucket-digest Bloom filter obtains significant improvement in false positive ratio compared with a regular Bloom filter when filters are sparse (that is, a high ratio of m/n) and for a sub-optimal number of hash functions (resulting from time-constrained systems).

Clearly from Fig. 2, the benefit of the Bloom-Digests scheme in terms of false positive ratio increases with the ratio m/n. The reason for this is the following: when the Bloom filter is sparse, the probability that digest symbols are informative is high. When m/n=10, the maximum reduction in false positive ratio is obtained when k=1 (by a factor of approximately 3.5); significant improvement is achieved also for k=2 and k=3. For the maximum ratio of m/n checked, namely 80, the Bloom-Digests scheme reduces the false positive ratio by orders of magnitude for certain values of k; e.g., the false positive ratio is decreased by a factor of almost 200 for k=2.

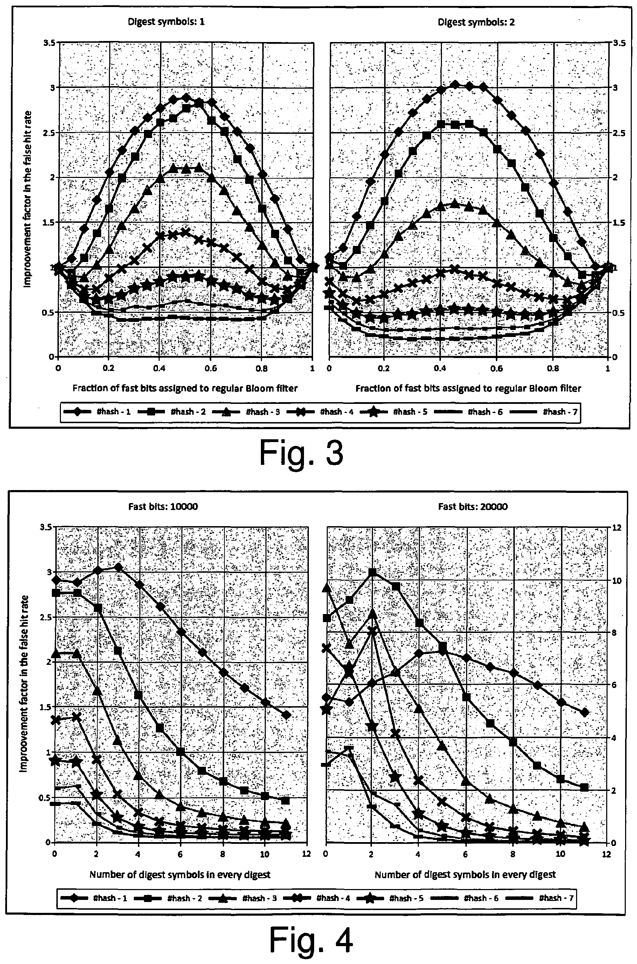

Fig. 3 describes the improvement in false positive ratio as a function of space partition between layers. In this experiment m=10000. The optimal space partition between the two layers of the new scheme is seen for various values of k. The left (respectively right) part of the Fig. 3 depicts this information when a single digest symbol (respectively, two digest symbols) is used per every buckets set. As mentioned before, it can be seen that in all cases, the optimal partition is roughly when the m bits are partitioned equally between the two layers.

Fig. 4 describes the improvement in false positive ratio obtained by the proposed Bloom-Digests scheme (when space partition is optimal) as a function of the number of digest symbols assigned to every buckets set. The left (respectively right) part of Fig. 3 shows the results when m/n=10 (respectively 20). It can be seen that the optimal number of digest symbols to use increases with m/n.

**Claims**

1. A computer-implemented method for representing sets of elements in a Bloom filter randomized data structure stored in a memory of a computerized system and adapted to reduce the false-positive probability in a time-constrained of said computerized system, said method comprising the steps of:

(a) partitioning a memory space in a memory unit used by said data structure to two layers, such that the first layer (101) functions as a regular Bloom filter bits representing buckets, and to a second layer (102);
(b) partitioning said first layer (101) of buckets and said second layer (102) of digest symbols into sets of symbols (105) and sets of buckets;
(c) assigning sets of symbols (105) to sets of buckets; and **characterized in that**:
said second layer (102) comprises digest symbols being ternary symbols representing common properties of the items belonging to a bucket set; and that it further comprising the step of
(d) representing properties of elements belonging to said sets of buckets as values in their corresponding symbols,

wherein upon querying whether an element belongs to a given set, if the Bloom filter returns a true or false positive response, the probability of false positive response is reduced by:

applying the hash functions to said elements and for each such index from the bucket indexes;
identifying the set of digest symbols corresponding to the set of consecutive buckets, to which a checked bucket belongs;
applying a hash function to said element;
examining each digest symbol against said element and if said digest symbol has a don't care value, determining that the examined digest symbol is non-informative.

2. The method of claim 1, wherein a Bloom filter bit is interpreted as a flag, indicating whether or not its associated bucket is empty of elements.

3. The method of claim 1, wherein a Bloom filter bit is reset when its associated bucket is empty of elements, or set when its associated bucket is not empty.

4. The method of claim 1, wherein elements are mapped uniformly and randomly to bucket-indices using k independent hash functions.

5. The method of claim 1, wherein the Bloom filter bits are stored in a fast memory unit.

6. The method of claim 1, wherein the buckets themselves are stored in an accessible memory unit.

7. The method of claim 1, wherein the buckets themselves are stored in the same memory unit used to store the Bloom filter bits or in a slower and cheaper type of memory unit.

8. The method of claim 1, wherein each symbols set is stored in memory adjacent to its associated Bloom filter bits set.

9. The method of claim 1, wherein all symbols sets are stored in a continuous memory block.

10. The method of claim 1, wherein symbols are arbitrarily distributed throughout the memory.

11. The method of claim 1, wherein symbols position in the memory is defined by the user of the method.

12. The method of claim 1, wherein second layer (102) symbols are ternary symbols, the value of which is selected from the group consisting of '0', '1' and 'don't care'.

13. The method of claim 1, wherein second layer (102) symbols are created by applying hash functions to the elements stored in the sets of buckets.

14. The method of claim 1, wherein second layer (102) symbols are created by choosing predefined random bits of the stored elements.

15. The method of claim 1 further supporting operations selected from the group consisting of inserting an element, removing an element, and querying whether or not an element is in a set.

16. The method of claim 1, wherein the memory space is equally partitioned between the two layers.

17. The method of claim 1, wherein the memory space partition between the two layers is defined by the user of the method.

**Patentansprüche**

1. Computer-implementiertes Verfahren zum Darstellen von Sätzen von Elementen in einer randomisierten Bloom-Filter-Datenstruktur, die in einem Speicher eines computerisierten System gespeichert wird und dafür ausgelegt ist, die falsch-positive Wahrscheinlichkeit in einem zeitbeschränkten System des computerisierten Systems zu verringern, wobei das Verfahren folgende Schritte umfasst:

(a) Partitionieren eines Speicherplatzes in einer Speichereinheit, die von der Datenstruktur genutzt wird, in zwei Schichten, dergestalt, dass die erste Schicht (101) als reguläre Bloom-Filter-Bits dient, die Buckets darstellen, und eine zweite Schicht (102);
(b) Partitionieren der ersten Schicht (101) von Buckets und der zweiten Schicht (102) von Digest-Symbolen zu Sätzen von Symbolen (105) und Sätzen von Buckets;
(c) Zuweisen von Sätzen von Symbolen (105) zu Sätzen von Buckets; und

**dadurch gekennzeichnet, dass**:

die zweite Schicht (102) Digest-Symbole umfasst, die ternäre Symbole sind, die gemeinsame Eigenschaften der Elemente darstellen, die zu einem Bucket-Satz gehören; und
dass es des Weiteren folgenden Schritt umfasst:
(d) Darstellen von Eigenschaften von Elementen, die zu den Sätzen von Buckets gehören, als Werte in ihren entsprechenden Symbolen,

wobei nach dem Abfragen, ob ein Element zu einem gegebenen Satz gehört, falls das Bloom-Filter eine wahre oder falsche positive Antwort zurücksendet, die Wahrscheinlichkeit einer falschen positiven Antwort verringert wird durch:

Anwenden der Hash-Funktionen auf die Elemente und für jeden solchen Index aus den Bucket-Indizes;
Identifizieren des Satzes von Digest-Symbolen, die dem Satz von aufeinanderfolgenden Buckets entsprechen, zu dem ein überprüfter Bucket gehört;
Anwenden einer Hash-Funktion auf das Element;
Untersuchen jedes Digest-Symbols anhand des Elements, und falls das Digest-Symbol einen "Don't care"-Wert hat, Bestimmen, dass das untersuchte Digest-Symbol nicht-informativ ist.

2. Verfahren nach Anspruch 1, wobei ein Bloom-Filter-Bit als ein Flag interpretiert wird, das angibt, ob sein zugehöriger Bucket von Elementen entleert ist oder nicht.

3. Verfahren nach Anspruch 1, wobei ein Bloom-Filter-Bit zurückgesetzt wird, wenn sein zugehöriger Bucket von Elementen entleert ist, oder gesetzt wird, wenn sein zugehöriger Bucket nicht leer ist.

4. Verfahren nach Anspruch 1, wobei Elemente gleichmäßig und nach dem Zufallsprinzip unter Verwendung von k unabhängigen Hash-Funktionen auf Bucket-Indizes abgebildet werden.

5. Verfahren nach Anspruch 1, wobei die Bloom-Filter-Bits in einer schnellen Speichereinheit gespeichert werden.

6. Verfahren nach Anspruch 1, wobei die Buckets selbst in einer zugängliche Speichereinheit gespeichert werden.

7. Verfahren nach Anspruch 1, wobei die Buckets selbst in derselben Speichereinheit gespeichert werden, die dafür verwendet wird, die Bloom-Filter-Bits zu speichern, oder in einem langsameren und kostengünstigeren Typ von Speichereinheit gespeichert werden.

8. Verfahren nach Anspruch 1, wobei jeder Symbolsatz im Speicher neben seinem zugehörigen Bloom-Filter-Bits-Satz gespeichert wird.

9. Verfahren nach Anspruch 1, wobei alle Symbolsätze in einem kontinuierlichen Speicherblock gespeichert werden.

10. Verfahren nach Anspruch 1, wobei Symbole beliebig im gesamten Speicher verteilt werden.

11. Verfahren nach Anspruch 1, wobei die Symbolposition im Speicher durch den Nutzer des Verfahrens definiert wird.

12. Verfahren nach Anspruch 1, wobei die Symbole der zweiten Schicht (102) ternäre Symbole sind, deren Wert aus der Gruppe bestehend aus "0", "1" und "don't care" ausgewählt ist.

13. Verfahren nach Anspruch 1, wobei die Symbole der zweiten Schicht (102) durch Anwenden von Hash-Funktionen auf die Elemente erzeugt werden, die in den Sätzen von Buckets gespeichert sind.

14. Verfahren nach Anspruch 1, wobei die Symbole der zweiten Schicht (102) durch Auswählen vorgegebener Zufallsbits der gespeicherten Elemente erzeugt werden.

15. Verfahren nach Anspruch 1, das des Weiteren Operationen unterstützt, die aus der Gruppe bestehend aus "Einfügen eines Elements", "Entfernen eines Elements" und "Abfragen, ob sich ein Element in einem Satz befindet oder nicht" ausgewählt sind.

16. Verfahren nach Anspruch 1, wobei der Speicherplatz gleichmäßig zwischen den zwei Schichten partitioniert wird.

17. Verfahren nach Anspruch 1, wobei die Speicherplatzpartition zwischen den zwei Schichten durch den Nutzer des Verfahrens definiert wird.

**Revendications**

1. Procédé mis en oeuvre par informatique pour représenter des ensembles d'éléments dans une structure de données randomisées de filtre de Bloom qui est stockée dans une mémoire d'un système informatique et qui est adaptée pour réduire la probabilité de faux positifs sous contrainte temporelle dudit système informatique, ledit procédé comprenant les étapes constituées par :

   (a) le partitionnement d'un espace de mémoire dans une unité de mémoire qui est utilisée par ladite structure de données selon deux couches, de telle sorte que la première couche (101) joue le rôle de bits réguliers de filtre de Bloom qui représentent des compartiments, et selon une seconde couche (102) ;
   (b) le partitionnement de ladite première couche (101) de compartiments et de ladite seconde couche (102) de symboles condensés selon des ensembles de symboles (105) et des ensembles de compartiments ;
   (c) l'attribution d'ensembles de symboles (105) à des ensembles de compartiments ; et

   **caractérisé en ce que** :
   ladite seconde couche (102) comprend des symboles condensés qui sont des symboles ternaires qui représentent des propriétés communes des objets appartenant à un ensemble de compartiments ; et **en ce qu'**il comprend en outre l'étape constituée par :
   (d) la représentation de propriétés d'éléments appartenant auxdits ensembles de compartiments en tant que valeurs selon leurs symboles correspondants ; dans lequel :
   suite à une interrogation pour déterminer si oui ou non un élément appartient à un ensemble donné, si le filtre de Bloom retourne une réponse vraie positive ou fausse positive, la probabilité de réponse fausse positive est réduite en réalisant les actions qui suivent :

   l'application des fonctions de hachage auxdits éléments et pour chaque index pris parmi les index de compartiment ;
   l'identification de l'ensemble de symboles condensés qui correspond à l'ensemble de compartiments consécutifs, auquel un compartiment vérifié appartient ;
   l'application d'une fonction de hachage audit élément ;
   l'examen de chaque symbole condensé en regard dudit élément et si ledit symbole condensé présente une valeur 'ne pas prêter attention', la détermination du fait que le symbole condensé examiné est non informatif.

2. Procédé selon la revendication 1, dans lequel un bit de filtre de Bloom est interprété en tant que drapeau, qui indique si oui ou non son compartiment associé est vide d'éléments.

3. Procédé selon la revendication 1, dans lequel un bit de filtre de Bloom est réinitialisé lorsque son compartiment associé est vide d'éléments, ou est établi lorsque son compartiment associé n'est pas vide.

4. Procédé selon la revendication 1, dans lequel les éléments sont cartographiés de façon uniforme et de manière aléatoire sur des index de compartiment en utilisant k fonctions de hachage indépendantes.

5. Procédé selon la revendication 1, dans lequel les bits de filtre de Bloom sont stockés dans une unité de mémoire rapide.

6. Procédé selon la revendication 1, dans lequel les compartiments eux-mêmes sont stockés dans une unité de mémoire accessible.

7. Procédé selon la revendication 1, dans lequel les compartiments eux-mêmes sont stockés dans la même unité de mémoire que celle qui est utilisée pour stocker les bits de filtre de Bloom ou dans un type plus lent et moins cher d'unité de mémoire.

8. Procédé selon la revendication 1, dans lequel chaque ensemble de symboles est stocké dans une mémoire qui est adjacente à son ensemble de bits de filtre de Bloom associé.

9. Procédé selon la revendication 1, dans lequel les ensembles de symboles sont tous stockés dans un bloc de mémoire continu.

10. Procédé selon la revendication 1, dans lequel les symboles sont distribués de manière arbitraire sur toute la mémoire.

11. Procédé selon la revendication 1, dans lequel la position des symboles dans la mémoire est définie par l'utilisateur du procédé.

12. Procédé selon la revendication 1, dans lequel les symboles de la seconde couche (102) sont des symboles ternaires dont la valeur est sélectionnée parmi le groupe qui est constitué par '0', '1' et 'ne pas prêter attention'.

13. Procédé selon la revendication 1, dans lequel les symboles de la seconde couche (102) sont créés en appliquant des fonctions de hachage aux éléments qui sont stockés dans les ensembles de compartiments.

**14.** Procédé selon la revendication 1, dans lequel les symboles de la seconde couche (102) sont créés en choisissant des bits aléatoires prédéfinis des éléments stockés.

**15.** Procédé selon la revendication 1, supportant en outre les opérations qui sont sélectionnées parmi le groupe constitué par l'insertion d'un élément, la suppression d'un élément et l'interrogation pour déterminer si oui ou non un élément est dans un ensemble.

**16.** Procédé selon la revendication 1, dans lequel l'espace de mémoire est partitionné de façon égale entre les deux couches.

**17.** Procédé selon la revendication 1, dans lequel le partitionnement de l'espace de mémoire entre les deux couches est défini par l'utilisateur du procédé.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008307189 A

**Non-patent literature cited in the description**

- **A. KIRSCH ; M. MITZENMACHER.** Less Hashing, Same Performance: Building a Better Bloom Filter. *Random Struct. Algorithms,* vol. 33 (2), 187-218

- **ASHISH GOEL et al.** *A small subset queries and Bloom filters using ternary associative memories, with applications*